Europäisches Patentamt

European Patent Office

Office européen des brevets

(19)

(11) Publication number: **0 018 026**
A1

# EUROPEAN PATENT APPLICATION

(12)

(21) Application number: 80200267.5

(22) Date of filing: 24.03.80

(51) Int. Cl.³: **G 01 B 11/08,** G 01 B 11/10, G 01 B 11/00

(30) Priority: 05.04.79 IT 2161779

(43) Date of publication of application: 29.10.80 Bulletin 80/22

(84) Designated Contracting States: **AT BE CH DE FR GB LU NL SE**

(71) Applicant: **C.D.E. Controlli Dispositivi Elettronici S.r.l., Viale Coni Zugna, 6, I-20144 Milano (IT)**

(72) Inventor: **Rossi, Giorgio, C.D.E. Controlli Dispositivi Elettronici S.r.l., Viale Coni Zugna, 6 I-20144 Milano (IT)**

(74) Representative: **Giambrocono, Alfonso, Dott. Ing. et al, Via Rosolino Pilo 19/B, I-20129 Milano (IT)**

(54) **An optical device for dimensional measurement of articles.**

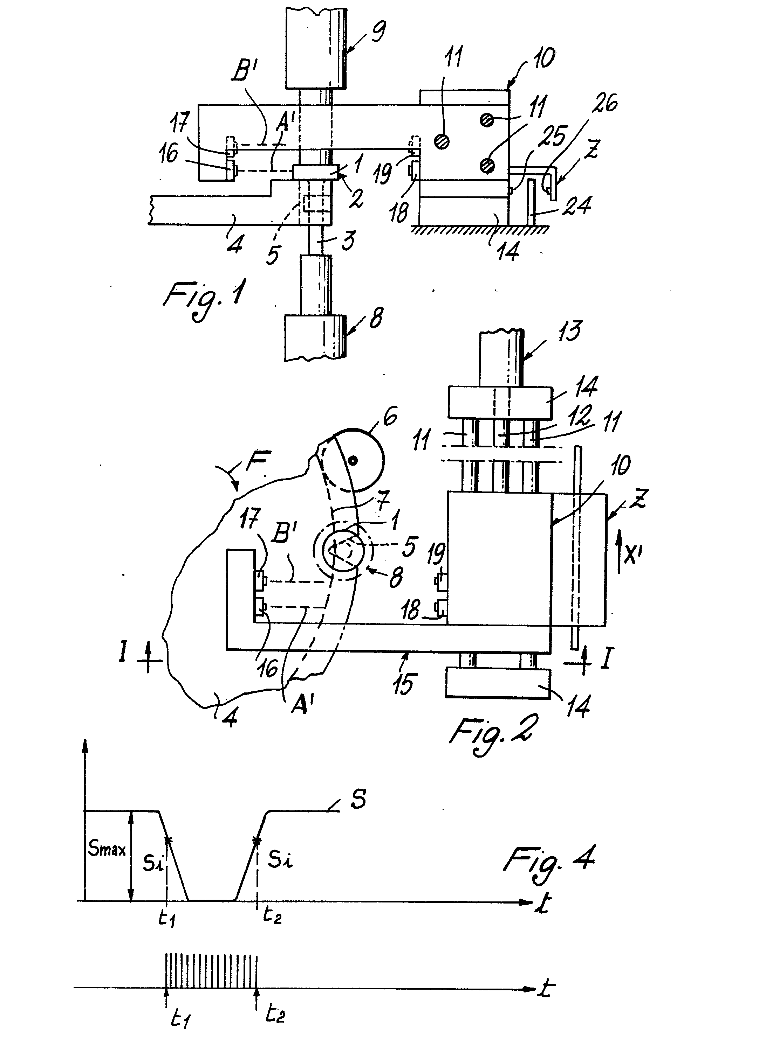

(57) The article (1, 2, 3) is scanned by at least one light beam (such as, for example, infrared or laser beam, or produced by lamps) as the former moves relatively to the latter, with the receiver transducer (18, 19), which is rigidly connected to the light beam source (16, 17) supplying a signal enabling to sense the dimension of the latter (Fig. 1).

EP 0 018 026 A1

ACTORUM AG

"A PHOTO-COUPLER DEVICE FOR CONTACTLESS DIMENSIONAL CONTROL

OR MEASUREMENT OF ARTICLES"

\*\*\*\*\*\*\*\*

This invention relates to a device for dimensional control or measurement of articles.

Several techniques are known for carrying out the dimensional control or measurement of articles. However, all of these techniques involve a contact with the articles, whereby such operations cannot be rapidly carried out, which is a serious disadvantage, particularly where such controls and measurements have to be made on pieces or articles which are produced at very high rates. In the case, for example, of productions of screws or similar articles by automatic high speed machines, the slow manual check operations would involve, where an article does not meet the desired requirements, a rejection of a high number of articles being produced.

It is the object of the present invention to provide an automatic device for dimensional control or measurement of articles without any physical contact with the parts or elements of the device, the latter being allotted the task of control or measurement.

It is another object of the present invention to provide a control or measurement device which is very simple, reliable and of a low cost.

These objects, in addition to further objects which will become

more apparent from the following detailed description, are achieved by a device according to the invention, which is essentially characterized in that the article is scanned by at least one light beam (such as, for example, infrared or laser beam, or produced by lamps) as the former moves relatively to the latter, with the receiver transducer, which is rigidly connected to the light beam source, supplying a signal enabling to sense the dimension of the latter.

According to a preferred and convenient embodiment of the invention, to assure that a given dimension of an article is within a predetermined tolerance range, it is contemplated that the output signal of the receiver transducer, as suitably amplified, is used to drive through logic circuits the reading of a linear transducer (for example, a per se well known optical line), which reading is displayed by an electronic counter having several preselections. The sensed values of the latter would represent the controlled dimension and can be compared with a preset threshold range. Should the threshold range in such a comparison be exceeded either by excess or defect, a signal would be generated to control an alarm or the stop of the article producing machine, or another operation, whereas should the dimension be within the predetermined tolerance, an enabling signal would be generated.

The invention will be more clearly understood from the following detailed description, given by mere way of unrestrictive example, of some practical and particular embodiments thereof shown in the accompanying drawings, in which:

0018026

Fig. 1 is a side view of a device according to the invention with the article holder shown in a sectional view taken along line I-I of Fig. 2;

Fig. 2 is a plan view of the above Fig. 1;

Fig. 3 is a view of the electronic circuit diagram for the device shown in Figs. 1 and 2;

Fig. 4 is a diagram on time base showing both the output signal of the photo-couplers and the pulses of the transducer (for example of the optical line) corresponding to the effected measurement, counted in the electronic counter of Fig.3;

Fig. 5 is a side elevational and sectional view showing a variant or modification to the device according to the invention;

Fig. 6 is a sectional view according to line VI-VI of Fig. 7 schematically showing a device for controlling moving articles, the device being schematically shown in a plan view in Fig. 7, and the circuit of which is shown in Fig. 8;

Fig. 9 is a highly schematic plan view showing another device; and

Fig. 10 is also a plan view showing a still further device.

Figs. 1 to 4 show a device used for measuring both the diameter of the head 1 of a screw, rivet or pin designated as a whole at 2, and the diameter of the relative shank 3.

An intermittently rotating disc 4 peripherally has a series of equally spaced apart V-shaped notches 5.

Each of said notches 5 are supplied with a screw 2 by any known device, such as for example a chute when the notch stops in front of

If said disc 4 rotates in the direction of arrow F, such a device will be located upstream of the measuring device shown in the above mentioned figures of the drawings. At a position downstream of the device, a device or mechanism of any known type will be provided for removing the screw 2 from the holding notch therefor.

In order to retain the screw in the relative notch as said disc 4 rotates, idle rollers 6 having a vertical axis may be provided, as resiliently pressed within a peripheral groove 7 of the disc.

At the screw or rivet measuring position, two opposite pneumatic cylinders coaxial with each other and the screw, and indicated at 8 and 9, are applied on the screw and since cylinder 8 is of the largest strength, the screw is lifted from the plane or face of disc 4, so that its head 2 is brought to a given height or level and, as explained below, said head 2 and shank 3 can be measured.

After the screw has been lifted as shown, the two indicated measurements are made by the device according to the invention.

A device according to the invention comprises a slide 10, which is slidably mounted on three rods 11 and connected to a stem 12 of a double-acting pneumatic cylinder 13. Said three guide rods 11 are secured between two fixed shoulders 14 and said cylinder causes a displacement or movement of slide 10 at each stop of disc 4. To this end, the disc could be integral with a cam acting on a microswitch, the latter causing through electrovalves or the like the operation of cylinder 13 or, where the machine is operated by electronic program, such an operation would be assigned to the program.

Upon reaching one of the end of stroke positions, the slide 10 there remains until, as said disc 4 advances, a new screw arrives at the measurement position.

When this occurs, said cylinder 13 is activated so as to move said 10 back to starting position to move again therefrom for the measurement stroke.

Slide 10 has an arm 15 cantilever extending to disc 4 and which, as seen in a plan view, is of L-shape. At the bent-over end of this arm there are secured, for example, two infrared photoemitters 16 and 17, the latter being arranged at different levels and located on two spaced apart vertical planes. Instead of photodiodes emitting in the infrared band, base light emitters or monochromatic lamps could be used. The radiation, emitted by the photoemitters through a very thin rectangular slit in a screen associated with the photoemitters or the like is received by a phototransistor 18,19, solar cell or other receiver transducer secured to slide 10, which will be selected depending on the required specifications of measurement accuracy and rate.

Each of the phototransistors 18, 19 are aligned with a photo-emitter 16, 17. Particularly, the photo-coupler (that is to say the assembly comprising a photoemitter and phototransistor cooperating therewith) 16, 18 is arranged at such a position that the related radiating beam A' can interfere with said shank 3 of the screw, after the latter has been lifted under the action of cylinders 8, 9, whereas the photo-coupler 17, 19 is arranged so that the related beam B' can interfere with said head 1 (with the screw at lifted position). Obviously this

0018026

interference occurs during the movement of slide 10.

When a screw is stationary and lifted to the control or measurement position, said slide 10 starts from the end of stroke position shown in Fig. 2, moving in the direction of arrow X'.

For the sake of simplicity in description, only the measurement for the diameter of the screw head 1 will be considered, as the measurement for shank 3 is similarly carried out. The measurement for the diameter of head 1 is assigned to photo-coupler 17, 19.

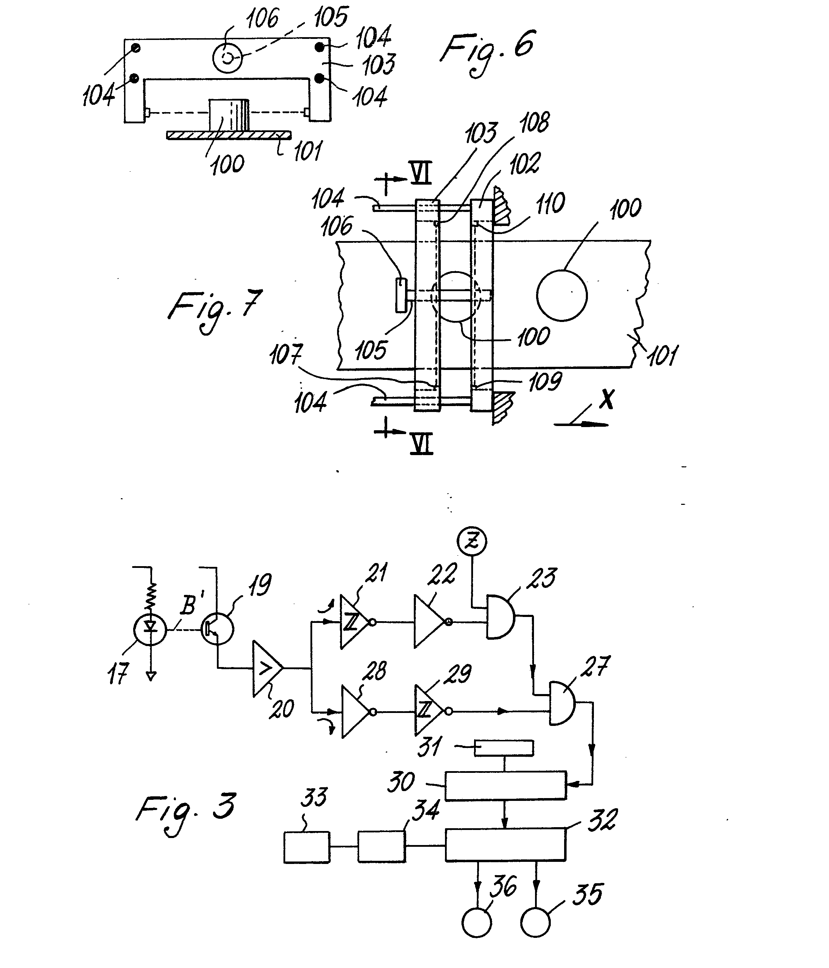

At the start of slide 10, the beams A' and B' have not yet been intercepted by the screw. Under this situation, at the output of phototransistor 19, or amplifier 20 connected thereto (see Fig. 3), the signal S has the maximum amplitude $S_{max}$ (see Fig. 4). As the slide advances, the beam B' commences to be intercepted by said head 1, so that the amplitude of signal S gradually decreases (see said Fig. 4). Upon reaching a value $S_i$, the output of comparator 21 passes from the logic level "1" to the logic level "0". Through an inverter amplifier 22 this signal is converted to the logic level "1" and applied to the AND gate 23, the pulses produced by an optical line Z being applied to the other input thereof. As well known, the optical line comprises a stationary transparent line 24 (see Figs. 1 and 2), having non transparent, very thin parallel lengths or sections, as well as a radiation emitter 25 and a receiver 26 thereon, aligned with each other, located at opposite sides of said line or rod 24 and both carried by said slide 10.

As a result of gating provided by said gate 23, such pulses are applied to a further AND gate indicated at 27. This gate is also open since a logic signal "1" is applied to its other said input. Thus, the signal applied to an inverter amplifier 28 causes at the output of the latter a logic signal "1" to appear which, when applied to the comparator 29 remains as such at the output of the latter. Therefore, from the instant t1, at which S is equal to $S_i$, the pulses of the optical line Z are supplied to the electronic counter 30, are counted therein and the count is displayed on displaying means 31 connected thereto. The pulses undergoing a count from instant t1 are shown at the bottom of Fig. 4.

Said slide 10 continues to advance and signal S is annulled when said beam A is fully intercepted by said head. When, on increasing, said signal S takes the value $S_i$ at the instant t2, the pulse count terminates. The counted number of pulses will correspond to the diameter of head 1.

The end of count occurs by gate blocking. Thus, said comparator 21 passes to logic level "1" and accordingly the output of inverter 22 passes to logic level "0", whereby said gate 23 is closed.

The count is fed from counter 30 to a comparing bus 32 which compares the counter data with at least one data preset through a keyboard 33 and decoder 34. In case of no coincidence between the two data, or should the measured value fail to be within a predetermined range of an allotted value, a signal is emitted, which may be addressed to an alarm device 35, or to the screw producing machine to stop the latter or, on the contrary, a gating signal is emitted.

In addition to the range within which the calculated value should be included for the screw to be acceptable, a wider range can be set through the keyboard so that, should the calculated value be within the two ranges, a signal is emitted for controlling a prealarm device 36.

In Fig. 5 there is schematically shown a device serving, for example, to measure the height of the head 201 of a screw 202, the latter being supported in a notch 204 of a continuously rotating disc 203.

The photo-coupler, herein also comprising a photodiode 214 and a phototransistor or solar cell 215, does not move with respect to the screw during the measuring step, but may be displaced, for example micrometrically, with respect to the upper face of disc 203 (which is effective as a reference plane) to set the desired height.

The light beam A" is of a given height "h".

Should the height of head 201 be larger or lower than a predetermined value, corresponding for example to the distance between the upper face of disc 203 and the center line of the light beam A" (which center line is shown by dashed line in the figure of the drawing), the more or less deviation from such a value of the actual head height is directly proportional to the partial darkening of the receiver and accordingly to the signal appearing at the output of the analogue amplifier connected with the phototransistor or

0018026

solar cell 215. This signal may reach a displayer connected to the amplifier through an analog/digital converter, and the displayed value corresponds to the actual head height. The amplifier output signal could also be used for warning purpose should the head height should more or less exceed a predetermined tolerance. To this end, a comparing circuit could be used, such as for example an electric or electronic bridge or a digital system.

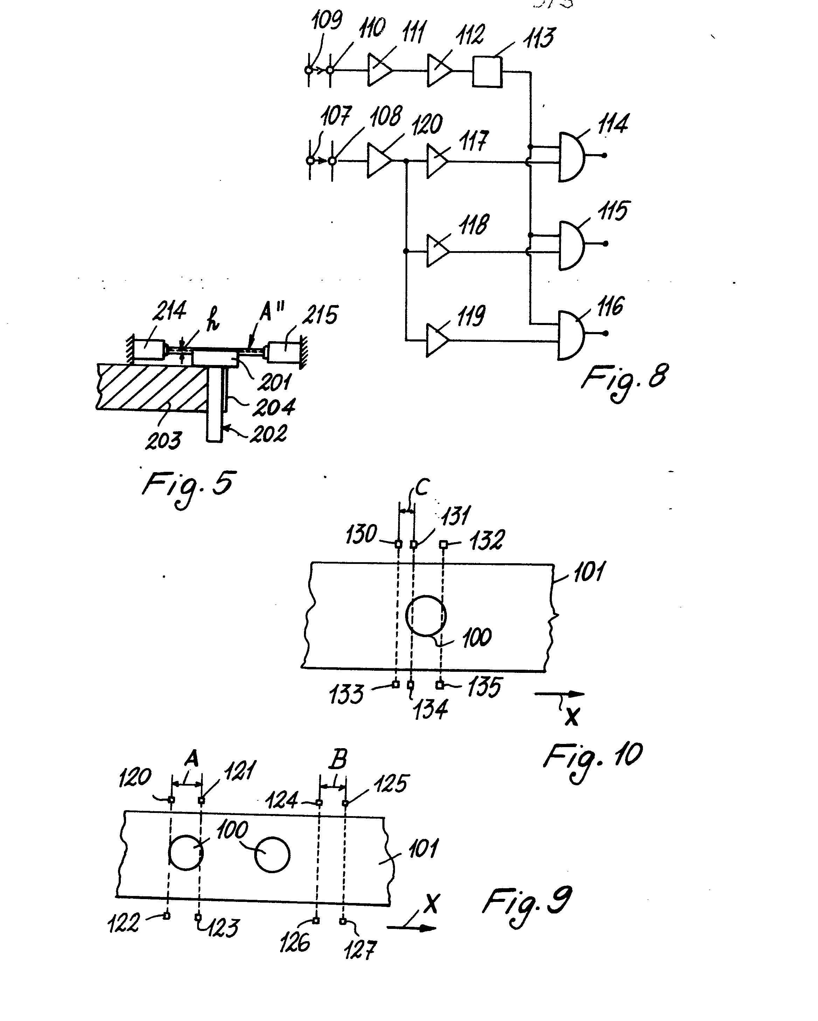

It is also within the scope of the invention to provide a dimensional control of moving articles. An example is shown in Figs. 6, 7 and 8. The articles are cylinders 100, the diameter of which is desired to be controlled. The articles are placed on a conveyor 101 fastly running or moving in the direction of arrow X. At the control station, two overturned "U" shape supports 102 and 103 are bridgewise arranged on said conveyor 101. The support 102 is stationary, whereas the other support 103 can be displaced along fixed guide rods 104 by means of a micrometrical screw 105, the latter extending between said two supports and being provided with an adjusting knob 106.

Each of said supports have a light emitter 107, 109 and a receiver 108, 110 in register with each other and arranged so that said articles 100 interfere in the path of the light beams from the emitter to the receiver.

When the receiver 110 is intercepted by article 100, the input and accordingly the output of amplifier 111 are decreased or lowered. Accordingly, the output of comparator 112 passes to another level. This output activates for a very short time the electronic timer 113,

BAD ORIGINAL

0018026

which then applies for the set time a gating signal to three A/D gates 114, 115 and 116. Among these three gates, that gate is conductive which at its input receives the signal from the comparator 117, 118, 119, with which the gate is associated. By an amplifier 120 said three comparators are connected to said receiver 108 and each have a different threshold value. Particularly:

(a) the signal will appear at the output of comparator 117 and accordingly at the output of gate 114 if the receiver is not "blinded" or intercepted by the article. This means that said article 100 is to be rejected because out of tolerance;

(b) the signal will appear at the output of comparator 118 and accordingly at the output of gate 115 if the receiver 108 is "blinded" or intercepted by the article for a predetermined fraction of time. This means that the article is acceptable; and

(c) the signal will appear at the output of comparator 119 and accordingly at the output of gate 116 if said receiver is completely "blided" or intercepted. This means that the article is to be rejected because of being beyond tolerance.

The output signal of the involved gate (114 or 115 or 116) is effective for controlling known not accepting devices, that is not acceptance of the article.

The dimensional control of articles 100 rapidly moved by said conveyor 101 can also occur by means of the device schematically shown in Fig. 9, which device is provided with two mechanical systems, such as that shown in Figs. 6 and 7. One of these systems

0018026

carries the receivers 120 and 121 and the emitters 122 and 123, and the other carries the receivers 124 and 125 and the emitters 126 and 127. One system is adjusted at the distance A, and the other system is adjusted at the distance B. The distance A corresponds to the minimum allowable measure, and distance B corresponds to the maximum allowable measure. When the photoreceiver 121 is darkened, it provides a gating for "reading" to the preceding photoreceiver 120, which should be darkened. Should this not occur, a signal of article out of tolerance is generated which operates known devices for rejecting or removing the article. When the photoreceiver 125 is darkened, it gates to reading the preceding photoreceiver 124, which should be illuminated. Should this not occur, a signal of article out of tolerance is generated, which operates known devices for rejecting or removing the article. The receivers may be shielded with slits of a few hundreds of millimeter and the signal thereof, which is directly proportional to the received light, is triggered to a definite level by comparing circuits.

In case of tolerances exceeding 1 mm, the arrangement shown in Fig. 1 can be used. The receiver 132 and emitter 135 are mounted on a fixed support, such as support 102 shown in Fig. 7; the receiver 131 along with the corresponding emitter 134 are mounted on an adjustable support, such as support 103 shown in Fig. 7; the receiver 130 and emitter 133 are mounted on a support, which is supported by support 103, so that it can be micrometrically displaced with respect to the latter. The darkening of receiver 132 starts the control

0018026

process carried out through the other two receivers. For acceptance, the article should be within the tolerance range "C" between the two receivers 130 and 131.

## C L A I M S

1. A photo-coupler device for contactless dimensional control or measurement of articles, characterized in that the article is scanned by at least one light beam (for example, infrared or laser beam, or produced by lamps) in the course of a relative movement between the former and the latter, with the supply by a receiver transducer rigidly connected to the light beam source of a signal enabling to sense a dimension of the latter.

2. A device according to Claim 1, characterized in that the source and receiver transducer make up a photo-coupler unit preferably operating in the infrared band, or by other monochromatic light.

3. A device according to any of the preceding claims, characterized in that at least one photo-coupler unit is mounted on a slide or carriage, controlled by a drive means and moving with respect to the article.

4. A device according to any of the preceding claims, characterized in that the photo-coupler unit determines the beginning and end of the measure.

5. A device according to any of the preceding claims, characterized in that the output signal of the photo-coupler unit is used to drive through logic circuits the reading of a linear transducer, preferably an optical line.

6. A device according to any of the preceding claims, characterized in that said optical line is stationary and the means producing and receiving the light beam scanning it are carried by said slide or carriage.

7. A device according to any of the preceding claims, characterized in that the reading of the linear transducer, preferably comprising an optical line, is displayed by a preselectable electronic counter.

8. A device according to Claim 7, characterized in that the values sensed by said electronic counter are compared with a preset threshold range.

9. A device according to any of the preceding claims, characterized in that said article is carried by a stepwise or continuously moving conveyor.

10. A device according to any of the preceding claims, characterized in that means are provided at the measuring station for lifting said article.

11. A device according to any of the preceding claims, characterized in that said article is carried by a reference plane and interfers in the light beam of the photo-coupler unit which emits a signal, representative of the article dimension and which, converted in digital form, is displayed on displaying means.

12. A device according to any of the preceding claims, characterized by comprising two photo-coupler units, adjustable relative to each other, while said article is movable with respect to said units.

13. A device according to Claim 12, characterized in that the photo-coupler unit which is downstream most located is the unit gating the reading to the photo-coupler unit preceding it.

14. A device according to Claim 13, characterized in that the photo-coupler unit which is downstream most located is the unit imposing through a timer the reading time on the photo-coupler unit preceding it.

15. A device according to Claim 14, characterized in that the reading signal of the upstream photo-coupler unit is compared with different threshold values to provide through logic circuits alternative outputs.

16. A device according to any of the preceding claims, characterized in that said article is moving and the device comprises two arrangements of photo-coupler units, wherein each of the arrangements are formed of two photo-coupler units which are adjustable relative to each other, the photo-coupler units downstream most located in each of said arrangements gating the reading to the other units, the upstream most location checking if the article dimension is the minimum allowable dimension, while the downstream arrangement checks if such a dimension is the maximum allowable dimension.

17. A device according to any of the preceding claims, characterized by comprising three photo-coupler units which are adjustable relative to one another; the upstream most located unit gating the reading to the other units, the latter reading if the article is within a predetermined tolerance range.

Fig. 1

Fig. 2

Fig. 4

Fig. 6

Fig. 7

Fig. 3

Fig. 8

Fig. 5

Fig. 10

Fig. 9

European Patent Office

**EUROPEAN SEARCH REPORT**

| | **DOCUMENTS CONSIDERED TO BE RELEVANT** | | CLASSIFICATION OF THE APPLICATION (Int. Cl. ¹) |
|---|---|---|---|
| Category | Citation of document with indication, where appropriate, of relevant passages | Relevant to claim | |
| X | <u>FR - A - 2 320 526</u> (EXXON)<br><br>* Page 2, lines 6 to 19; figures; page 3, line 39 to page 4, line 10; page 6, lines 1 to 37 *<br><br>-- | 1,2,9-11 | G 01 B 11/08<br>11/10<br>11/00 |
| X | <u>US - A - 3 997 270</u> (SUZUKI)<br><br>* Figures 1,2 and 4; column 3, lines 15 to 50 *<br><br>-- | 1,2,4,9 | |
| X | <u>FR - A - 2 067 527</u> (COMMISSARIAT A L'ENERGIE ATOMIQUE)<br><br>* Figure 1; page 7, line 21 to page 8, line 32; figures 6 and 7; page 14, line 22 to page 15, line 13 *<br><br>-- | 1,3,4,12 | TECHNICAL FIELDS SEARCHED (Int.Cl. ³)<br><br>G 01 B 11/10<br>11/08<br>11/06<br>11/04<br>B 07 C 5/10 |
| X | <u>US - A - 4 043 673</u> (HARRIS et al.)<br><br>* Figures 1,2 and 3; column 3, line 23 to column 4, line 34; figure 6; column 6, lines 32-39 *<br><br>-- | 1,2,4,5,7,12 | |
| | <u>US - A - 3 555 288</u> (MORENIUS)<br><br>* Column 3, lines 14 to 36; figure 2 *<br><br>-- | 6 | |
| | <u>US - A - 3 983 388</u> (GUGLIOTTA)<br><br>* Figure 1; column 5, lines 9 to 46 *<br><br>-- | 11 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | <u>US - A - 4 088 411</u> (AHLQUIST et al.)<br><br>* Figure 1 and abstract *<br><br>-- | 13 | |
| | ./.. | | &: member of the same patent family, corresponding document |

| | The present search report has been drawn up for all claims | | |
|---|---|---|---|
| Place of search<br>The Hague | Date of completion of the search<br>07-07-1980 | Examiner<br>IVES | |

EPO Form 1503.1 06.78

European Patent
Office

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | FR - A - 1 525 773 (LEPETIT) <br> * Figure 1; page 2, left-hand column, lines 33 to 60 * <br> -- | 16 | |
| | US - A - 3 365 699 (FOSTER) <br> * Figure 5; column 7, line 26 to column 8, line 21 * <br> -- | 14 | |
| | US - A - 2 916 633 (STONE et al.) <br> * Figures 1 and 2; column 3, lines 1 to 4 and line 63 to column 4, line 13 * <br> -- | 17 | TECHNICAL FIELDS SEARCHED (Int. Cl. ³) |
| P | FR - A - 2 430 595 (SAGEM) <br> * Figures 2 and 3; page 2, line 29 to page 4, line 23 * <br> ---- | 1,6 | |

EPO Form 1503.2   06.78